# EUROPEAN PATENT APPLICATION

(11) **EP 4 224 839 A1**
(43) Date of publication of application: **09.08.2023**
(21) Application number: 20956363.4
(22) Date of filing: 13.11.2020
(51) Int. Cl.: H04N 7/18, H04N 21/235, H04N 21/84

(54) **VIDEO SHARING SYSTEM, PORTABLE TERMINAL, VIDEO COMMUNICATION ADAPTER, MANAGEMENT SERVER, AND VIDEO SHARING METHOD**

(30) Priority: 29.09.2020 JP 2020163950
(71) Applicant: Telenet Corporation, Iida-shi Nagano 399-2561 (JP)
(72) Inventor: AOYAMA, Takako, Iida-shi Nagano 399-2561 (JP)
(74) Representative: Berggren Oy
(86) International application number: PCT/JP2020/042501
(87) International publication number: WO 2022/070435

(57) **Abstract**

There is provided a video image sharing system capable of performing shooting using a video image transmitted from a wired camera or a wireless camera in addition to a camera contained in a portable terminal. A video image sharing system includes a management server, a portable terminal including a built-in camera and communicable with the management server, a video image communication adapter including at least one of a wired camera and a wireless camera to be selected on the basis of an instruction from the portable terminal and communicable with the management server, and a display terminal connected to the management server, in which one of the built-in camera, the wired camera, and the wireless camera is selected as a shooting camera for distributing a moving image to the management server, the portable terminal acquires its own positional information, the portable terminal or the video image communication adapter transmits video image data and positional information from the camera selected by the portable terminal to the management server, and the display terminal displays, on the basis of the data received from the management server, a position on a map of the portable terminal and a video image.

## Description

### Technical Field

The present invention relates to a video image sharing system for sharing respective video images from cameras that differ in connection method, a portable terminal, a video image communication adapter, a management server, and a video image sharing method.

### Background Art

Conventionally, a system that displays a video image and positional information transmitted from a portable terminal, together with a map, on a display terminal has been operated as a video image sharing system. The system is used as a disaster video image sharing system, thereby making it possible to grasp a disaster situation shot by the portable terminal, together with a position of the portable terminal, and to contribute to formulation of a disaster countermeasure.

Patent Literature 1 describes a support device capable of communicating with each of a first terminal to be operated by a communicator and a second terminal to be operated by an emergency personnel, the support device including an acquisition unit that acquires positional information of the first terminal and communicator information inputted to the first terminal and acquires positional information of the second terminal and emergency personnel information inputted to the second terminal, and a generation unit that generates site data in which a position of the first terminal and a position of the second terminal are displayed on a map, generates the site data to which the communicator information or the emergency personnel information is added every time the communicator information or the emergency personnel information is acquired, and distributes the generated site data to the first terminal and the second terminal.

Patent Literature 2 describes a monitoring camera system including site equipment installed in a vehicle and a central monitoring device connected to the site equipment via a wireless network, in which the site equipment includes a vehicle communication device including a control unit that receives as input a video image signal from a monitoring camera that shoots the outside of the vehicle and a wireless communication unit that transmits the inputted video image signal from the monitoring camera to the central monitoring device via the wireless network.

Patent Literature 3 describes a remote video image data acquisition system including a site-side terminal device connected to a communication line in a remote location and portably configured and an operation-side terminal device connected to the communication line, in which the site-side terminal device is configured to include camera means configured such that moving image data and still image data having a higher resolution than the resolution of the moving image data can be outputted by picking up an image, site-side control means for controlling an operation of the camera means on the basis of a predetermined command, and site-side communication means for transmitting the moving image data and the still image data to be outputted from the camera means via the communication line and receiving the predetermined command via the communication line, and the operation-side terminal device is configured to include operation means for inputting the command, operation-side communication means for receiving the moving image data and the still image data to be transmitted from the site-side communication means via the communication line and transmitting the command inputted by the operation means via the communication line, display means for displaying the moving image data received by the transmission-side communication means, and storage means for storing the still image data received by the transmission-side communication means.

### Citation List

### Patent Literature

Patent Literature 1: Japanese Patent Laid-Open No. 2019-169015
Patent Literature 2: Japanese Patent Laid-Open No. 2017-175184
Patent Literature 3: Japanese Patent Laid-Open No. 2003-87774

### Summary of Invention

### Technical Problem

There are a wide variety of types of equipment for shooting a video image. For example, a smartphone contains a camera capable of shooting a video image, and can shoot and stream the video image. As another shooting equipment, a wired camera capable of outputting a video image from a cable, e.g., an HDMI (registered trademark) cable or a USB cable and a wireless camera capable of outputting a video image by wireless communication (Wi-Fi, etc.) are commercially available and used. In view of such circumstances, in a video image sharing system, any type of camera can be conveniently and practically used.

Such a camera has functions not possessed by a built-in camera in a smartphone, e.g., functions such as a high resolution, a zoom magnification, infrared shooting, and waterproof, and may use such functions.

The present invention has as its object to provide a video image sharing system capable of performing shooting using a video image transmitted from a wired camera or a wireless camera in addition to a camera contained in a portable terminal as a shooting device.

### Solution to Problem

The invention as set forth in claim 1 for solving the above problem provides a video image sharing system including a management server, one or more portable terminals communicable with the management server, one or more video image communication adapters each communicable with the management server and each of the portable terminals, and a display terminal communicable with the management server, in which the portable terminal includes a built-in camera capable of shooting a moving image on the management server, means for controlling the video image communication adapter, means for selecting any one of transmission of video image data from the camera in the portable terminal to the management server from the portable terminal, transmission of video image data from a wired camera connected to the video image communication adapter to the management server, and transmission of video image data from a wireless camera connected to the video image communication adapter to the management server as video image data to be transmitted to the management server, means for acquiring positional information of the own portable terminal, and means for transmitting the acquired positional information as an acquisition position of the video image data, the video image communication adapter includes means for receiving video image data from at least one of the wired camera and the wireless camera on the basis of an instruction from the portable terminal, and means for transmitting the video image data received on the basis of an instruction from the portable terminal to the management server, the management server includes means for receiving video image data transmitted from the selected portable terminal or the selected video image communication adapter and positional information transmitted from the portable terminal, and means for transmitting the positional information of the portable terminal and the video image data, which have been received, to the display terminal, and the display terminal includes means for displaying, on the basis of the video image data and the positional information from the management server, a position on a map of the portable terminal and a video image based on the portable terminal or the video image data.

Similarly, the invention as set forth in claim 2 provides the video image sharing system as set forth in claim 1, in which the portable terminal is a smartphone, and an application stored in the portable terminal has a function of transmitting video image data acquired by the built-in camera to the management server and a function of operating the video image communication adapter.

Similarly, the invention as set forth in claim 3 provides the video image sharing system as set forth in claim 1, in which the portable terminal includes means for transmitting a text inputted in association with a video image sent out as a comment, the management server includes means for receiving the comment from the display terminal and sending out the comment to the display terminal, and the display terminal includes means for displaying the comment.

Similarly, the invention as set forth in claim 4 provides the video image sharing system as set forth in claim 1, in which the portable terminal includes means for displaying an urgency degree selection column representing a plurality of degrees of urgency and means for selecting the degree of urgency in a shooting site from the urgency degree selection column and transmitting the degree of urgency, the management server includes means for receiving the degree of urgency in the display terminal and sending out the degree of urgency to the display terminal, and the display terminal includes means for displaying the degree of urgency.

Similarly, the invention as set forth in claim 5 provides a portable terminal including positional information acquisition means and a built-in camera and controlling a management server and a video image communication adapter to which at least one of a wired camera and a wireless camera is connected, the portable terminal further including means for sending out acquired positional information to the management server and determining from which of the built-in camera, the wired camera, and the wireless camera video image data is sent out to the management server and sending out the video image data.

Similarly, the invention as set forth in claim 6 provides the portable terminal as set forth in claim 5, further including means for transmitting a text inputted in association with the video image data sent out to the management server as a comment to the management server.

Similarly, the invention as set forth in claim 7 provides the portable terminal as set forth in claim 5, further including means for displaying an urgency degree selection column representing a plurality of degrees of urgency, and means for selecting the degree of urgency in a shooting site from the urgency degree selection column and transmitting the degree of urgency to the management server.

Similarly, the invention as set forth in claim 8 provides a video image communication adapter that transmits video image data from a connected wired camera or wireless camera to a management server via a portable communication service or a public wireless LAN service, the video image communication adapter including means for receiving an instruction from a portable terminal, at least one of means for receiving video image data from the wired camera on the basis of an instruction from the portable terminal and means for receiving video image data from the wireless camera on the basis of an instruction from the portable terminal, and means for transmitting the video image data received on the basis of the instruction from the portable terminal to the management server.

Similarly, the invention as set forth in claim 9 provides a management server that receives video image data from a portable terminal or a video image communication adapter and displays a video image based on the video image data on a connected display terminal, the management server including means for receiving at least one of video image data from a built-in camera contained in the portable terminal, video image data from a wired camera connected to the video image communication adapter, and video image data from a wireless camera wirelessly connected to the video image communication adapter, means for acquiring positional information from the portable terminal, and means for transmitting the acquired video image data and positional information to the display terminal.

Similarly, the invention as set forth in claim 10 provides the management server as set forth in claim 9, further including means for receiving text data inputted from the portable terminal in association with a video image received from the portable terminal or the video image communication adapter and means for transmitting the text data, together with the video image data, as a comment to the display terminal.

Similarly, the invention as set forth in claim 11 provides the management server as set forth in claim 9, further including means for receiving a degree of urgency selected from an urgency degree selection column representing a plurality of degrees of urgency in the portable terminal in association with a video image received from the portable terminal or the video image communication adapter, and means for transmitting the degree of urgency to the display terminal.

Similarly, the invention as set forth in claim 12 provides a method for sharing a video image in a video image sharing system including a management server, at least one portable terminal including a built-in camera and communicable with the management server, a video image communication adapter including at least one of a wired camera and a wireless camera to be selected on the basis of an instruction from the portable terminal and communicable with the management server, and a display terminal connected to the management server, the video image sharing method including the step of the portable terminal selecting any one of the built-in camera, the wired camera, and the wireless camera as a shooting camera for distributing a moving image to the management server, the step of the portable terminal acquiring its own positional information, the step of the portable terminal or the video image communication adapter transmitting video image data from the camera selected by the portable terminal to the management server, the step of the portable terminal transmitting the positional information of the own portable terminal to the management server, the step of the management server receiving the video image data and the positional information transmitted from each of the portable terminals, the step of the management server transmitting the video image data and the positional information of the portable terminal to the display terminal, and the step of the display terminal displaying, on the basis of the video image data and the positional information received from the management server, a position on a map of the portable terminal and a video image based on the portable terminal or the video image data.

### Advantageous Effect of Invention

According to the present invention, a video image picked up with a camera on the side of a portable terminal, together with positional information, is transmitted to a management server, thereby enabling a position on a map of the portable terminal and the video image picked up to be displayed on a display terminal and enabling the video image to be shot using various types of cameras such as a built-in camera in the portable terminal, a wired camera, and a wireless camera and sent out on the side of the portable terminal in this case.

That is, according to a video image sharing system as set forth in claim 1 and a video image sharing method as set forth in claim 12, when a video image is shared in a video image sharing system including a management server, at least one portable terminal including a built-in camera and communicable with the management server, a video image communication adapter including at least one of a wired camera and a wireless camera to be selected on the basis of an instruction from the portable terminal and communicable with the management server, and a display terminal connected to the management server, the portable terminal can select any one of the built-in camera, the wired camera, and the wireless camera as a shooting camera for distributing a moving image to the management server.

The portable terminal acquires its own positional information, and the portable terminal or the video image communication adapter transmits video image data from the camera selected by the portable terminal to the management server. The portable terminal transmits the positional information of the own portable terminal to the management server, the management server receives the video image data and the positional information transmitted from the each portable terminal and transmits the video image data and the positional information to the display terminal, and the display terminal displays, on the basis of the video image data and the positional information from the management server, a position on the map of the portable terminal and a video image based on the portable terminal or the video image data.

Accordingly, in the portable terminal, a video image can be shot by selecting any one of the camera contained in the portable terminal, the wired camera connected to the video image communication adapter, and the wireless camera and sent out to the management server. Therefore, a video image is readily shot with the camera contained in the portable terminal, and various video images, such as a high-quality video image, a high-resolution video image, a high-magnification video image, a video image other than a visible-light video image, and an underwater video image, which cannot be shot with the built-in camera, are shot using the wired camera or the wireless camera having various functions not possessed by the built-in camera so that the video images can be sent out to the management server and displayed on the display terminal together with positional information.

According to the video image sharing system as set forth in claim 2, the portable terminal is a smartphone, and a video image shot with the built-in camera is transmitted to the management server by a function of an application stored in the portable terminal. The video image communication adapter is operated by the portable terminal so that a video image shot with the wired camera connected to the video image communication adapter or a video image shot with the wireless camera can be transmitted to the management server.

Therefore, a video image shot with any one of the cameras is also transmitted to the management server, and is displayed on the display terminal together with a position on a map.

According to a video image sharing system as set forth in claim 3, a text inputted in association with a video image sent out from the portable terminal is transmitted as a comment. This comment is displayed on the display terminal from the management server. Therefore, a photographer's comment associated with the video image can be displayed on the display terminal simultaneously with the video image.

According to the video image sharing system as set forth in claim 4, a degree of urgency selected from an urgency degree selection column representing a plurality of degrees of urgency is transmitted from the portable terminal, and the management server causes the display terminal to display the degree of urgency. Therefore, a degree of urgency associated with a video image, together with the video image, can be displayed on the display terminal.

According to the portable terminal as set forth in claim 5, the portable terminal acquires positional information and sends out the positional information to the management server, and selects a video image from any one of the built-in camera contained in the portable terminal, the wired camera connected to the video image communication adapter, and the wireless camera and transmits the video image from the selected camera to the management server.

Accordingly, a video image is readily shot with the camera contained in the portable terminal, and various video images, such as a high-quality video image, a high-resolution video image, a high-magnification video image, a video image other than a visible-light video image, and an underwater video image, which cannot be shot with the built-in camera, are shot using the wired camera or the wireless camera having various functions not possessed by the built-in camera so that the video images can be sent out to the management server and displayed on the display terminal together with positional information.

According to the portable terminal as set forth in claim 6, a text inputted in association with the video image sent out from the portable terminal can be transmitted as a comment. This comment is transmitted to the display terminal from the management server, and is displayed on the display terminal. Therefore, a photographer's comment associated with a video image can be displayed simultaneously with the video image on the display terminal.

According to the portable terminal as set forth in claim 7, a degree of urgency selected from an urgency degree selection column representing a plurality of degrees of urgency is transmitted, and the management server transmits the degree of urgency to the display terminal. Therefore, a degree of urgency associated with a video image, together with the video image, can be displayed on the display terminal.

According to the video image communication adapter as set forth in claim 8, video image data from a connected wired camera or wireless camera is transmitted to a management server via a portable communication service or a public wireless LAN service. At this time, the video image communication adapter receives an instruction from a portable terminal, and receives the video image data from the wired camera or receives the video image data from the wireless camera on the basis of the instruction and transmits the received video image data to the management server.

Therefore, various types of cameras can be selected and connected as the wired camera or the wireless camera to the video image communication adapter. Accordingly, various video images such as a high-quality video image, a high-resolution video image, a high-magnification video image, a video image other than a visible-light video image, and an underwater video image are shot using the wired camera or the wireless camera having various functions not possessed by the built-in camera in the portable terminal so that the video images can be sent out to the management server and displayed on the display terminal together with positional information.

According to a management server as set forth in claim 9, the management server receives video image data transmitted from a portable terminal or a video image communication adapter and positional information from the portable terminal, and transmits the video image data and the positional information to a display terminal. Further, the display terminal displays a map, a position on the map of the portable terminal, and a video image shot with a camera selected by the portable terminal on the basis of the video image data and the positional information from the management server.

Accordingly, the management server can display, on the portable terminal, a video image shot with any one of a camera contained in the portable terminal, a wired camera, and a wireless camera. Accordingly, a video image readily shot with the camera contained in the portable terminal and various video images, such as a high-quality video image, a high-resolution video image, a high-magnification video image, a video image other than a visible-light video image, and an underwater video image, shot with the wired camera or the wireless camera having various functions not possessed by the built-in camera, together with positional information, can be displayed on the display terminal.

According to the management server as set forth in claim 10, a text inputted from the portable terminal in association with a video image received from the portable terminal can be received as a comment and displayed on the display terminal. Therefore, information that cannot be obtained by only a video image can be acquired from the displayed comment in the display terminal.

According to the management server as set forth in claim 11, a degree of urgency selected from an urgency degree selection column representing a plurality of degrees of urgency is transmitted to the display terminal from the portable terminal, and the degree of urgency is displayed on the display terminal. Therefore, a degree of urgency associated with a video image, together with the video image, can be displayed on the display terminal.

### Brief Description of Drawings

[Figure 1] Figure 1 is a block diagram illustrating an entire configuration of a video image sharing system according to an embodiment of the present invention.
[Figure 2] Figure 2 is a block diagram illustrating a schematic configuration of a video image communication adapter in the video image sharing system.
[Figure 3] Figure 3 is a block diagram illustrating a configuration and a processing flow of the video image sharing system.
[Figure 4] Figure 4 is a flowchart illustrating a processing flow among units in the video image sharing system.
[Figure 5] Figure 5 illustrates a display screen of a portable terminal, where Figure 5(a) is a diagram illustrating an initial screen, and Figure 5(b) is a diagram illustrating a selection screen of a camera to be used.
[Figure 6] Figure 6 illustrates a display screen of a portable terminal, where Figure 6(a) is a diagram illustrating a state where a camera has been started up, and Figure 6(b) is a diagram illustrating a state where a video image is being transmitted.
[Figure 7] Figure 7 illustrates a display screen of a portable terminal, where Figure 7(a) is a diagram illustrating a state where a video image and a comment are being transmitted, and
Figure 7(b) is a diagram illustrating a state where a position of the portable terminal is being confirmed.
[Figure 8] Figure 8 illustrates a display screen of a display terminal, where Figure 8(a) is a diagram illustrating a state where a map and two portable terminals are connected to each other, and Figure 8(b) is a diagram indicating that respective video images from six portable terminals can be displayed.

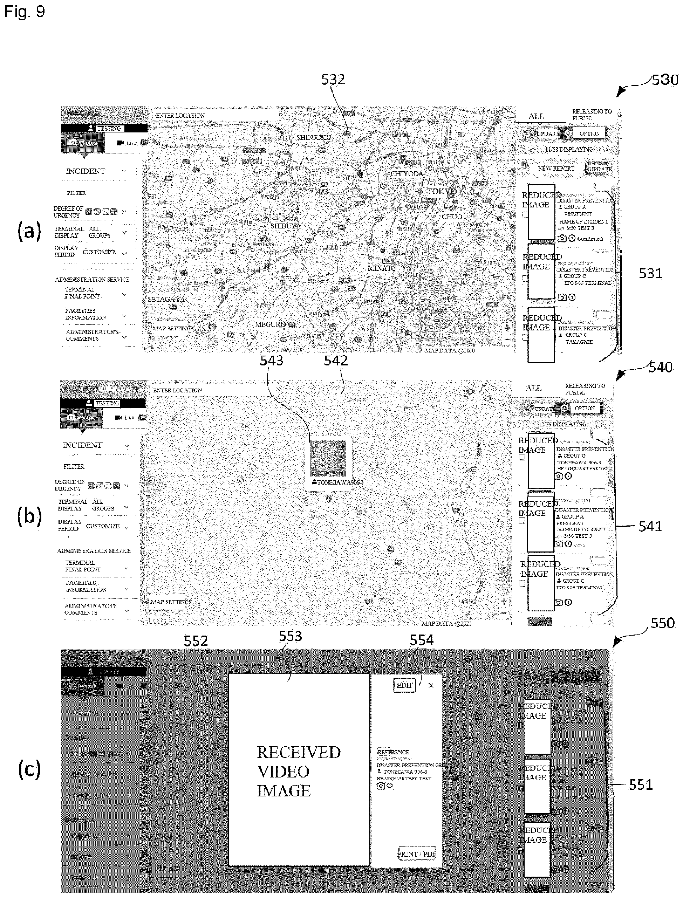

[Figure 9] Figure 9 illustrates a display screen of a display terminal, where Figure 9(a) is a diagram illustrating a state where respective positions of a plurality of portable terminals displayed on a map and respective reduced video images of video images from the portable terminals are displayed, Figure 9(b) is a diagram illustrating the position on the map of the specified portable terminal and the reduced video image of the video image from the portable terminal, and Figure 9(c) is a diagram illustrating a state where the video image from the specified portable terminal is displayed in an enlarged manner on the map.

### Description of Embodiment

A video image sharing system, a portable terminal, a video image communication adapter, a management server, and a video image sharing method according to an embodiment for implementing the present invention will be described with reference to the drawings.

### <Entire Configuration of Video Image Sharing System 100>

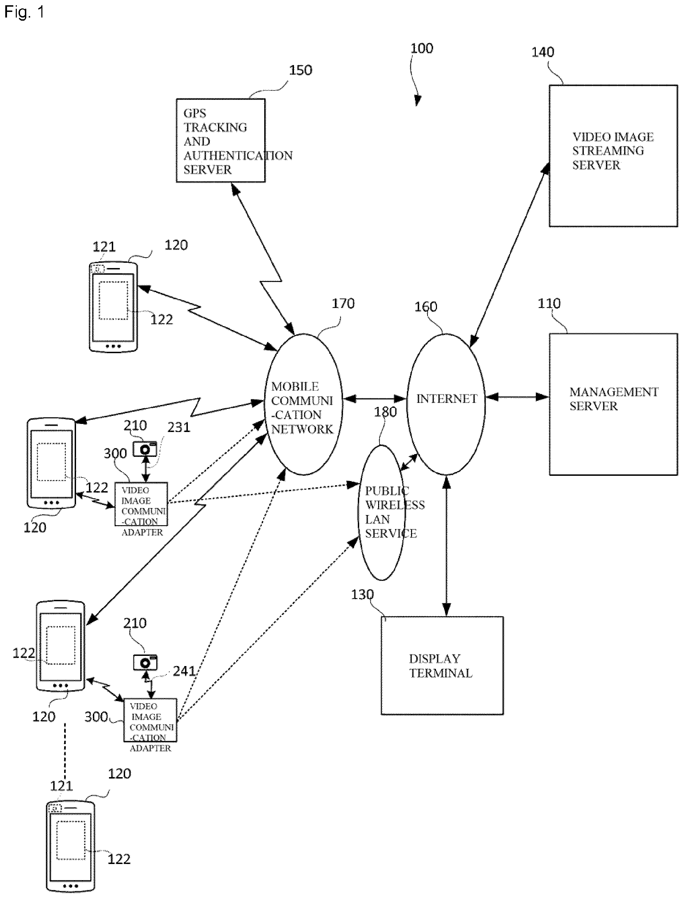

First, an entire configuration of a video image sharing system according to an embodiment of the present invention will be described. Figure 1 is a block diagram illustrating an entire configuration of a video image sharing system according to the embodiment of the present invention. A video image sharing system 100 according to the present embodiment includes a management server 110, one or a plurality of portable terminals 120, 120, ..., 120, a display terminal 130, a video image streaming server 140, a GPS tracking and an authentication server 150.

The video image sharing system 100 according to the present embodiment is used as a disaster video image sharing system, and displays a video image of a situation of a disaster shot on the side of the portable terminal 120 arranged in each place at the time of the disaster, together with a position of the portable terminal 120, on the display terminal 130. The video image sharing system 100 is useful to formulate a disaster countermeasure because a situation in each place, for example, a situation of a disaster such as an overflow, a flood, or a landslide, together with its position, can be grasped. The video image sharing system 100 is used for a civil engineering work, for example, other than a disaster, to display a state of a construction site positioned in each place in a wide range, together with its position, as a video image on the display terminal 130 and grasp the video image, thereby making it possible to grasp an overall state.

In the video image sharing system 100 according to the present embodiment, the portable terminal 120 is connected to a mobile communication network 170, and the management server 110, the display terminal 130, and the video image streaming server 140 are connected to the Internet 160. The portable terminal 120 and the GPS tracking and authentication server 150 are connected to each other by the mobile communication network 170.

The Internet 160 and the mobile communication network 170 are connected to each other such that data can be transmitted and received. In the video image sharing system 100 according to the present embodiment, a video image from a video image communication adapter 300 may be connected to the management server 110 via a public wireless LAN service 180 and the Internet 160.

In the video image sharing system 100, a video image shot with a built-in camera 121 contained in the portable terminal 120 is transmitted to the video image streaming server 140 via the mobile communication network 170 and the Internet 160, and is transmitted to the management server 110 from the video image streaming server 140.

The portable terminal 120 includes a GPS receiving device as positional information acquisition means. The video image communication adapter 300 is connectible to the portable terminal 120 by radio (Wi-Fi, Bluetooth (registered trademark)). A wired camera 210 to be connected via a cable (HDMI (registered trademark), USB, etc.) or a radio (Wi-Fi) are connected to the video image communication adapter 300 as a camera other than the built-in camera 121. The video image communication adapter 300 is used when the wired camera 210 or the wireless camera 220 is selected and a video image is transmitted therefrom.

The management server 110 acquires a video image from the portable terminal 120 or the video image communication adapter 300 connected to the portable terminal 120 via the Internet 160, the mobile communication network 170, the public wireless LAN service 180, and the video image streaming server 140, and displays the video image on the display terminal 130 via the Internet 160. The video image includes a moving image, a still image, a streaming moving image, and a voice.

In the video image sharing system 100 according to the present embodiment, the management server 110 and the GPS tracking, GPS tracking, and authentication server 150 are managed by a provider that manages the video image sharing system 100 and provides a video image sharing service to a customer. The portable terminal 120, the video image communication adapter 300, the wired camera 210, and the wireless camera 220 are managed by the customer of the provider. The portable terminal 120 is brought by an employee of the customer, for example, as needed, and is arranged in a portion where a video image is shot. The display terminal 130 is installed in a management headquarter or the like of the customer on which the video image from the portable terminal 120 is desired to be displayed.

With the video image sharing system 100, a video image shot with the built-in camera 121 in the portable terminal 120 arranged in each place, the wired camera 210 connected to the video image communication adapter 300, or the wireless camera 220 can be displayed on the display terminal 130 arranged in the management headquarter or the like of the customer.

A Web RTC commercial service to be provided on the Internet can be used as the video image streaming server 140. As a result, development of an application or the like made communicable via a common protocol set and to be used in the video image sharing system 100 can be made easy and high in quality.

A moving image sharing service on another web can be used in addition to a Web RTC.

The management server 110 is configured by a computer that manages the entire video image sharing system 100 and has a function of communicating video image data and text data and various types of input-output devices. The management server 110 stores a communication application, a video image transmission application to the display terminal 130, and the like in addition to basic software.

The portable terminal 120 is a smartphone, and includes the built-in camera 121. The portable terminal 120 stores a video image sharing application 122. The video image sharing application 122 sends out a video image, a degree of urgency, and a comment, and controls the video image communication adapter 300. The video image sharing application 122 transmits a video image shot by the portable terminal 120 as it is to the management server 110.

The video image communication adapter 300 is controlled to control start, end, and others of shooting with the wired camera 210 or the wireless camera 220 and transmit a video image shot with the wired camera 210 or the wireless camera 220. Further, the video image sharing application 122 in the portable terminal 120 can be authenticated by the authentication server 150 in addition to acquiring positional information of the own terminal and acquiring tracking information from the authentication server 150 using a GPS (global positioning system).

Although only three portable terminals 120 and two video image communication adapters 300 are described in Figure 1, their respective numbers can be appropriately increased or decreased. Similarly, although only one display terminal 130 is displayed in Figure 1, the number of display terminals 130 can be set to two or more.

### <Video Image Communication Adapter 300>

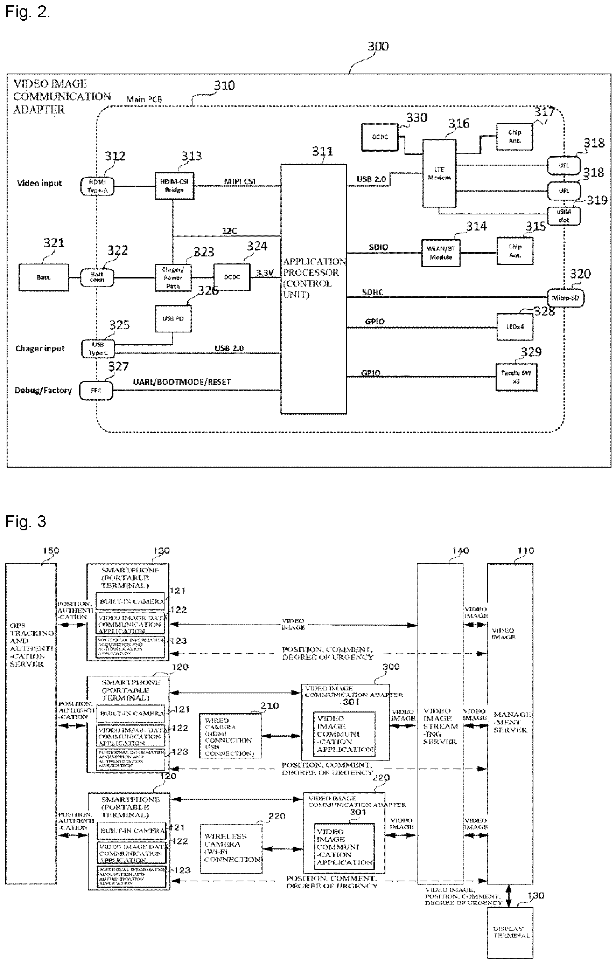

Then, the video image communication adapter 300 will be described. Figure 2 is a block diagram illustrating a schematic configuration of the video image communication adapter in the video image sharing system. The video image communication adapter 300 is connected to the portable terminal 120, and is controlled by the video image sharing application 122, and the wired camera 210 or the wireless camera 220 can be connected thereto. The video image communication adapter 300 stores a video image communication application 301.

As illustrated in Figure 2, the video image communication adapter 300 includes a main substrate 310, and includes an application processor 311 as a control unit in the main substrate 310. The application processor 311 executes the video image communication application 301, to control an operation of the video image communication adapter 300. Video image data shot by controlling the wired camera 210 or the wireless camera 220 on the basis of control of the application processor 311 is sent out toward the management server 110.

The video image communication adapter 300 includes a wireless connection chip 314 and a chip antenna 315 for wireless connection to the portable terminal 120, the wireless camera 220, and a public wireless LAN service (a Wi-Fi hot spot) in addition to including an HDMI (registered trademark) terminal 312 and an HDMI (registered trademark) control chip 313 as an input terminal of the wired camera 210.

The video image communication adapter 300 includes an LTE modem 316 that performs data communication conforming to a 4G standard, a chip antenna 317, external antenna terminals 318, 318, and an SIM slot 319. Power is supplied to the LTE modem 316 from a DC/DC converter 230.

Further, the video image communication adapter 300 includes a micro SD card slot 320 into which a micro SD card is inserted, a battery connector 322 to which power is supplied from a battery 321 as a power supply, a power supply control chip 323, and a voltage conversion DC/DC converter 324. Further, the video image communication adapter 300 includes a USB terminal 325 for connecting USB equipment such as a camera or an input-output device, a charge control chip 326 enabling charging from the USB terminal 325, and a debug/factory terminal 327 to be used for device adjustment such as debug.

The video image communication adapter 300 includes four LEDs 328 each representing a driving state and three depression switches 329 for device resetting and device setting.

With the video image communication adapter 300, an HDMI (registered trademark) cable of the wired camera 210 is connected to the terminal 312, enabling shot video image data to be transmitted using the portable terminal 120 or the public wireless LAN service 180 wirelessly by the wireless connection chip 314 and to be transmitted using the mobile communication network 170 conforming to a 4G standard by the LTE modem 316 or the like.

Similarly, with the video image communication adapter 300, the wireless camera 220 is connected to the video image communication adapter 300 by the wireless connection chip 314 or the like, enabling shot video image data to be transmitted using the portable terminal 120 or the public wireless LAN service 180 wirelessly by the wireless connection chip 314 and to be transmitted using the mobile communication network 170 conforming to a 4G standard by the LTE modem 316 or the like.

The above description has been made assuming that the video image communication adapter 300 is of a wired-wireless dual-use type to which both the wired camera 210 and the wireless camera 220 can be connected. However, the video image communication adapter 300 can also be configured such that only the wired camera 210 or only the wireless camera 220 can be connected thereto.

### <Procedure for Video Image Sharing by Video Image Sharing System 100>

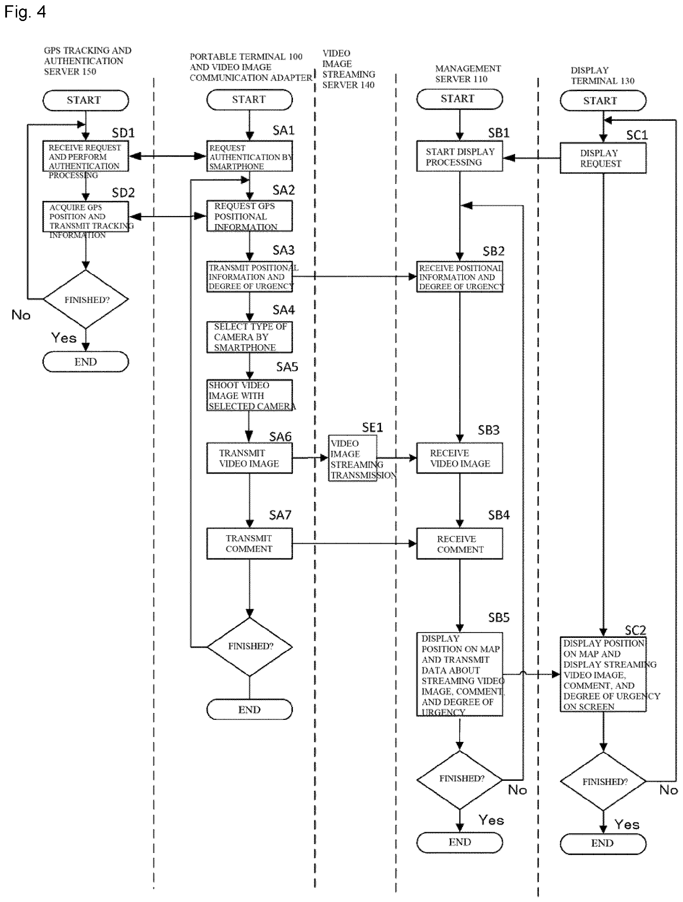

A procedure in a case where video image sharing is performed in the video image sharing system 100 will be described below. Figure 3 is a block diagram illustrating a configuration and a processing flow of the video image sharing system, and Figure 4 is a flowchart illustrating processing in the video image sharing system.

To use the video image sharing system 100, a display request is issued to the management server 110 from the display terminal 130 (step SC1 in Figure 4), and the management server 110 starts processing for displaying a video image, positional information, a comment, and a degree of urgency acquired from the portable terminal 120 or the like on the display terminal 130 upon receipt of the display request (step SB1), as illustrated in Figures 3 and 4.

Then, a processing start request on the side of the display terminal 130 is received, and positional information of the portable terminal 120 is acquired and authenticated on the side of the portable terminal 120. The portable terminal 120 is operated to start up the video image sharing application 122, and is connected to the GPS tracking and authentication server 150, to issue an authentication request (step SA1). The GPS tracking and authentication server 150 receives the authentication request to perform authentication, and transmits its result to the portable terminal 120 (step SD1).

Further, the portable terminal 120 requests GPS positional information of the GPS tracking and authentication server 150 (step SA2 in Figure 4). The GPS tracking and authentication server 150 receives the request to acquire a GPS position, and transmits tracking information to the portable terminal 120 (step SD2). The tracking information is appropriately updated. The portable terminal 120 transmits updated positional information to the management server 110 each time.

The portable terminal 120 transmits the acquired positional information and setting of a degree of urgency to the management server 110 (step SA3). The management server 110 receives the positional information and the setting of the degree of urgency (step SB2). The degree of urgency is "normal", "urgent", "very urgent", or "emergent", for example, and can be appropriately set. A value of the transmitted degree of urgency can be later changed.

Further, shooting of a video image is started on the side of the portable terminal 120. To shoot the video image on the side of the portable terminal 120, one of three types of cameras, i.e., the built-in camera 121 in the portable terminal 120, the wired camera 210, and the wireless camera 220 can be selected.

Accordingly, the portable terminal 120 specifies the camera to be used from the video image sharing application 122 (step SA4). When the built-in camera 121 is used, the video image communication adapter 300 is not used. When the wired camera 210 or the wireless camera 220 is used, the wired camera 210 or the wireless camera 220 is connected to the video image communication adapter 300, and the video image communication adapter 300 is controlled by the video image sharing application 122.

Shooting is performed with the camera selected by the portable terminal 120, i.e., any one of the built-in camera 121, the wired camera 210, and the wireless camera 220 (step SA5), and a video image is transmitted (step SA6). The video image shot with any one of the cameras is subjected to streaming processing by the video image streaming server 140 (step SE1), and is received by the management server 110 (step SB3). In the present embodiment, there are a plurality of data transmission paths depending on a difference among the cameras, for example.

This point will be described below. Input of a video image, a comment, and a degree of urgency in the portable terminal 120 will be described below.

The comment is transmitted as a text by the video image sharing application 122 from the portable terminal 120 (step SA7), and is received in the management server 110 (step SB4).

Upon receipt of these data, the management server 110 transmits respective data about the video image, the positional information, the degree of urgency, and the comment to the display terminal 130 (step SB5), and the display terminal 130 receives the data and displays the data on a screen in a selected predetermined format (step SC2). A display screen of the video image, the comment, the degree of urgency on the display terminal 130 will be described below. The order of transmitting and receiving the video image, the degree of urgency, and the comment is not limited to that in the above example. The comment can be transmitted before the video image, or the degree of urgency can be transmitted after the video image.

<Processing for Transmitting Video Image>

As described above, in the video image sharing system 100 according to the present embodiment, the built-in camera 121 in the portable terminal 120, the wired camera 210 connected to the video image communication adapter 300, and the wireless camera 220 connected to the video image communication adapter 300 can be used as a camera that shoots a video image.

Cameras other than the built-in camera 121 can be used. Accordingly, a hand-held camera, a camera having a high performance, and a camera capable of performing special shooting, for example, a camera capable of shooting various video images such as a high-quality video image, a high-resolution video image, a high-magnification video image, a video image other than a visible-light video image, and an underwater video image can be used.

When the wired camera 210 is used, the wired camera 210 connects a terminal of an HDMI (registered trademark) cable to the HDMI (registered trademark) terminal 312 in the video image communication adapter 300. When the wireless camera 220 is used, the wireless camera 220 and the video image communication adapter 300 are connected to each other by the wireless connection chip 314 or the like. The camera to be used is selected by the video image sharing application 122.

The video image communication adapter 300 transmits a video image to the management server 110 using any one of three types of transmission methods, described below, under an instruction from the video image sharing application 122 in the portable terminal 120. These methods are specified by the video image sharing application 122.

The first method is a method for transferring video image data of the portable terminal 120 as a smartphone to the management server using a 4G/LTE WAN of the smartphone. In this case, the video image communication adapter 300 is connected to the portable terminal 120 by the wireless connection chip 314 or the like, and video image data shot with the wired camera 210 or the wireless camera 220 is transmitted to the management server 110 from the portable terminal 120 via the mobile communication network 170 and the Internet 160. A degree of urgency and a comment are also transmitted to the management server 110 from the portable terminal 120.

The second method is a method for transferring a video image shot with the wired camera 210 or the wireless camera 220 connected to the video image communication adapter 300 to the management server 110 using a WAN of the public wireless LAN service 180 generally used by using the wireless connection chip 314 or the like in the video image communication adapter 300. In this case, the video image communication adapter 300 is connected to the public wireless LAN service 180 using the wireless connection chip 314 or the like, and transmits the video image shot with the wired camera 210 or the wireless camera 220 to the management server 110 via the public wireless LAN service 180 and the Internet 160. In this method, a degree of urgency and a comment are also transmitted to the management server 110 from the portable terminal 120 separately from the video image data.

The third method is a method for transferring a video image shot with the wired camera 210 or the wireless camera 220 connected to the video image communication adapter 300 to the management server 110 via the mobile communication network 170 and the Internet 160 by using the LTE modem 316 or the like in the video image communication adapter 300.

In this case, the video image communication adapter 300 is connected to the mobile communication network 170 through the LTE modem 316 or the like, and transmits a video image shot with the wired camera 210 or the wireless camera 220 to the management server 110 via the mobile communication network 170 and the Internet 160. In this method, a degree of urgency and a comment are also transmitted to the management server 110 from the portable terminal 120 separately from the video image data.

In any of the methods, the video image shot with the wired camera 210 or the wireless camera 220 can be transmitted to the management server 110.

<Display Screen of Portable Terminal 120>

Then, a display screen of the portable terminal 120 will be described. To transmit a video image, the portable terminal 120 executes the video image sharing application 122. Therefore, a transmission start screen is displayed on the portable terminal 120. An operation is performed by a screen of the portable terminal 120 that executes the video image sharing application 122.

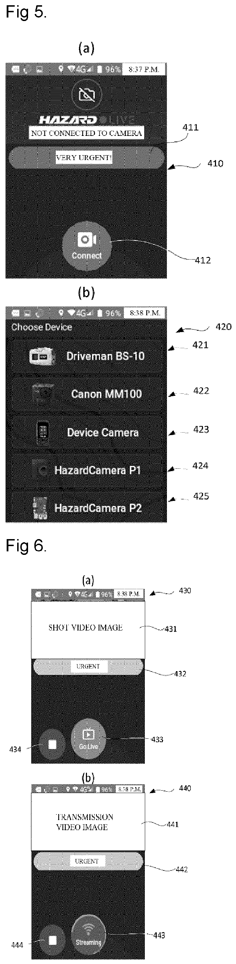

Figure 5 illustrates a display screen of a portable terminal. When an operation is started, a start screen 410 is displayed, as illustrated in Figure 5(a), on the portable terminal 120. An urgency degree specifying region 411 and a connection camera selection button 412 are displayed on the start screen 410. When the urgency degree specifying region 411 is touched, a degree of urgency can be selected, for example, "normal", "urgent", "very urgent!", "emergent", or the like can be selected.

When the connection camera selection button 412 is touched, a transition to a camera selection screen 420 illustrated in Figure 5(b) is made. Respective selection buttons 421 to 425 of various types of cameras that can be used are displayed on the camera selection screen 420. On the camera selection screen 420, the selection button 423 "Device Camera" is for selecting the built-in camera 121, and the other selection buttons 421, 422, 424, and 425 are used to select the wired camera 210 or the wireless camera 220. Any one of the selection buttons 421 to 425 is touched, to select the camera that performs shooting.

There occurs a state where shooting with the built-in camera 121 can be performed when the selection button 423 is touched and the wired camera 210 or the wireless camera 220 connected to the video image communication adapter 300 can perform shooting when the other selection buttons 421, 422, 4234, and 425 are touched.

Figure 6 illustrates a display screen of a portable terminal. On a shooting screen 430 illustrated in Figure 6(a), a shot video image display region 431 on which a video image being currently shot is displayed, an urgency degree display region 432 on which a current degree of urgency is displayed, a transmission start button 433, and a transmission stop button 434 are displayed.

When the transmission start button 433 is touched while the shot video image display region 431 is confirmed, transmission of a video image is started. When the transmission stop button 434 is touched, transmission of a video image is stopped. This example illustrates a case where the built-in camera 121 is used. Accordingly, a video image is displayed on the shot video image display region 431. However, if the wired camera 210 or the wireless camera 220 is used, a video image may not be displayed on the shot video image display region 431. The video image is confirmed with the wired camera 210 or the wireless camera 220.

When transmission of a video image is started, a transmission video image confirmation screen 440 is displayed, as illustrated in Figure 6(b). On the transmission video image confirmation screen 440, a transmission video image display region 441 on which a video image being transmitted is displayed, an urgency degree display region 442 on which a current degree of urgency is displayed, a transmission state display button 443 representing a transmission state, and a transmission stop button 444 are displayed. When the urgency degree display regions 432 and 442 are touched, a content of a degree of urgency can be changed.

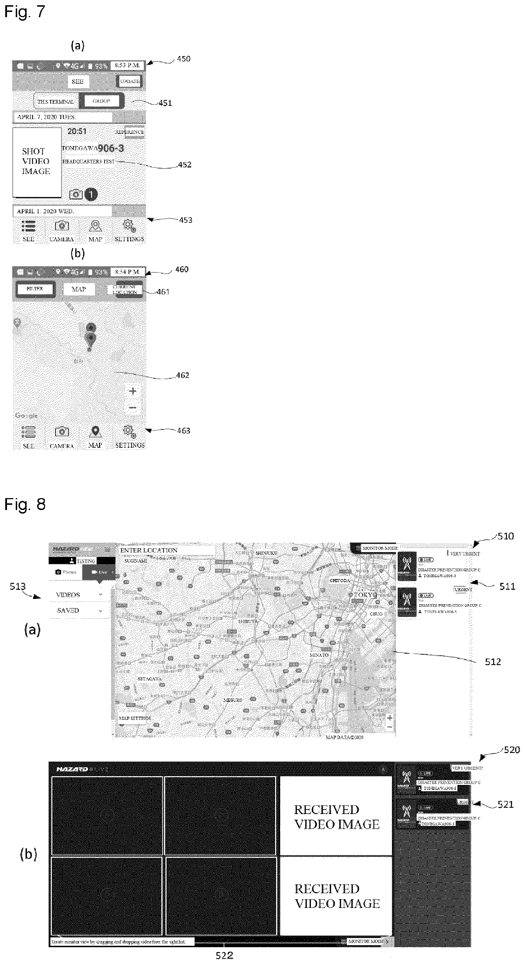

Figure 7 illustrates a display screen of a portable terminal. When a comment is inputted, a position text display screen 450 is displayed, as illustrated in Figure 7(a). On the position text display screen 450, a terminal group selection region 451, a display region 452 of a positional information text and a shot video image, and a menu region 453 are displayed. To input the comment, a text is inputted to the display region 452.

On the portable terminal 120, its own position on a map can be displayed. In this case, a map display screen 460 is displayed, as illustrated in Figure 7(b). On the map display screen 460, a display selection region 461, a map display region 462, and a menu region 463 are displayed. On the map display region 462, a position of the portable terminal 120 is marked and displayed on the map.

### <Display Screen of Display Terminal 130>

Then, a display screen of the display terminal 130 will be described. The display terminal 130 can display a screen on which each information is arranged in various positions and sizes upon receiving respective data about a video image, positional information, a comment, and a degree of urgency from the management server 110.

Figure 8 illustrates a display screen of a display terminal. On a map display screen 510 illustrated in Figure 8(a), a receiving terminal display region 511 on which information about the portable terminal 120 being received is displayed, a map display region 512 on which a map of a target region is displayed, and a display image selection region 513 are displayed.

In this example, video images or the like are being respectively received from the two portable terminals 120, displays respectively indicating that the video images are being received from the two portable terminals 120 are performed on the receiving terminal display region 511, and a name, a degree of urgency, and the like of the portable terminal 120 are displayed on each of the displays.

When a "live moving image" for displaying the video image from each of the portable terminals 120 is selected from the display image selection region 513, a video image display image 520 illustrated in Figure 8(b) is displayed. On the video image display image 520, a receiving terminal display region 521 on which information about the portable terminal 120 being received is displayed and a video image display region 522 on which a video image being received is displayed are displayed.

In this example, displays respectively indicating that the video images are being received from the two portable terminals 120 are performed on the receiving terminal display region 521, and a name and a degree of urgency of the portable terminal 120 are displayed on each of the displays.

On the video image display region 522, two video images respectively received from the two portable terminals 120 are displayed side by side. In this example, a region where a maximum of six video images respectively received from the six portable terminals 120 can be displayed is set. A maximum number of respective video images from the portable terminals 120 to be displayed can be appropriately changed.

On the display terminal 130, a position of the portable terminal 120, a reduced image of the received video image, and the like can be displayed on a map image obtained by displaying a map in an enlarged manner. Figure 9 illustrates a display screen of the display terminal. On a map image 530 illustrated in Figure 9(a), a reduced video image, a degree of urgency, a name, and the like from the portable terminal 120 that is receiving a video image are displayed on a portable terminal information display region 531, and a position of the portable terminal 120 is marked and displayed on a map 532.

On a map image 540 illustrated in Figure 9(b), a reduced video image, a degree of urgency, a name, and the like from the portable terminal 120 that is receiving a video image are displayed on a portable terminal information display region 541, and a reduced video image 543 is displayed at a position of the portable terminal 120 specified by the portable terminal information display region 541 on a map 542.

Further, on a map image 550 illustrated in Figure 9(c), a reduced video image, a degree of urgency, a name, and the like from the portable terminal 120 that is receiving a video image are displayed on a portable terminal information display region 551, a video image display region 553 on which a large video image received from the portable terminal 120 specified in the portable terminal information display region 551 and an information display region 554 on which information about a name, a degree of urgency, a comment, and the like are displayed are displayed on a map 552.

In the display terminal 130, these screen displays are appropriately changed, and an optimal screen is displayed so that a situation can be efficiently grasped.

As described above, a video image, positional information, a degree of urgency, and a comment from the side of the plurality of portable terminals 120 can be displayed in various formats on the display terminal 130. Accordingly, each type of information is displayed in an optimal format, as needed, so that a damage from a video image in a portion where each of the portable terminals 120 is arranged can be grasped and a countermeasure thereagainst can be formulated.

Although the management server 110 and the display terminal 130 are respectively described as different devices in the above-described embodiment, both respective functions of the management server 110 and the display terminal 130 can be implemented by a device such as one computer. With the one management server 110, respective video images from the plurality of portable terminals 120 belonging to each of different groups can be displayed on the display terminal 130 belonging to the corresponding group.

### Industrial Applicability

With a video image sharing system, a portable terminal, a video image communication adapter, a management server, and a video image sharing method according to the present invention, a video image picked up with a camera on the side of the portable terminal, together with positional information, is transmitted to a management server, thereby enabling a position on a map of the portable terminal and the video image picked up to be displayed on a display terminal and enabling the video image to be shot using various types of cameras such as a built-in camera in the portable terminal, a wired camera, and a wireless camera and sent out on the side of the portable terminal in this case. Accordingly, the present invention is applicable to grasping of a damage from a disaster and accurate grasping of a state of a construction work or the like in a wide area, and has high industrial applicability.

### Reference Signs List

100: video image sharing system
110: management server
120: portable terminal
121: built-in camera
122: video image sharing application
130: display terminal
140: video image streaming server
150: authentication server
160: Internet
170: mobile communication network
180: public wireless LAN service
210: wired camera
220: wireless camera
230: DC/DC converter
300: video image communication adapter
301: video image communication application
310: main substrate
311: application processor
312: terminal
313: control chip
314: wireless connection chip
315: chip antenna
316: LTE modem
317: chip antenna
318: external antenna terminal
319: SIM slot
320: micro SD card slot
321: battery
322: battery connector
323: power supply control chip
324: DC/DC converter
325: USB terminal
326: charge control chip
327: factory terminal
328: LED
329: depression switch
410: start screen
411: urgency degree specifying region
412: connection camera selection button
420: camera selection screen
421 ~ 425: selection button
430: shooting screen
431: shot video image display region
432: urgency degree display region
433: transmission start button
434: transmission stop button
440: transmission video image confirmation screen
441: transmission video image display region
442: urgency degree display region
443: transmission state display button
444: transmission stop button
450: position text display screen
451: terminal group selection region
452: display region
453: menu region
460: map display screen
461: display selection region
462: map display region
463: menu region
510: map display screen
511: receiving terminal display region
512: map display region
513: display image selection region
520: video image display image
521: receiving terminal display region
522: video image display region
530: map image
531: portable terminal information display region
532: map
540: map image
541: portable terminal information display region
542: map
543: reduced video image
550: map image
551: portable terminal information display region
552: map
553: video image display region
554: information display region
4234: selection button

## Claims

1. A video image sharing system comprising a management server, one or more portable terminals communicable with the management server, one or more video image communication adapters each communicable with the management server and each of the portable terminals, and a display terminal communicable with the management server, wherein
the portable terminal comprises
a built-in camera capable of shooting a moving image on the management server,
means for controlling the video image communication adapter,
means for selecting any one of transmission of video image data from the camera in the portable terminal to the management server from the portable terminal, transmission of video image data from a wired camera connected to the video image communication adapter to the management server, and transmission of video image data from a wireless camera connected to the video image communication adapter to the management server as video image data to be transmitted to the management server,
means for acquiring positional information of the own portable terminal, and
means for transmitting the acquired positional information as an acquisition position of the video image data,
the video image communication adapter comprises
means for receiving video image data from at least one of the wired camera and the wireless camera on the basis of an instruction from the portable terminal, and
means for transmitting the video image data received on the basis of an instruction from the portable terminal to the management server,
the management server comprises
means for receiving video image data transmitted from the selected portable terminal or the selected video image communication adapter and positional information transmitted from the portable terminal, and
means for transmitting the positional information of the portable terminal and the video image data, which have been received, to the display terminal, and
the display terminal comprises
means for displaying, on the basis of the video image data and the positional information from the management server, a position on a map of the portable terminal and a video image based on the portable terminal or the video image data.

2. The video image sharing system according to claim 1, wherein
the portable terminal is a smartphone, and
an application stored in the portable terminal has a function of transmitting video image data acquired by the built-in camera to the management server and a function of operating the video image communication adapter.

3. The video image sharing system according to claim 1, wherein
the portable terminal comprises means for transmitting a text inputted in association with a video image sent out as a comment,
the management server comprises means for receiving the comment from the display terminal and sending out the comment to the display terminal, and
the display terminal comprises means for displaying the comment.

4. The video image sharing system according to claim 1, wherein
the portable terminal comprises means for displaying an urgency degree selection column representing a plurality of degrees of urgency and means for selecting a degree of urgency in a shooting site from the urgency degree selection column and transmitting the degree of urgency,
the management server comprises means for receiving the degree of urgency in the display terminal and sending out the degree of urgency to the display terminal, and
the display terminal comprises means for displaying the degree of urgency.

5. A portable terminal comprising positional information acquisition means and a built-in camera and controlling a management server and a video image communication adapter to which at least one of a wired camera and a wireless camera is connected, the portable terminal further comprising
means for sending out acquired positional information to the management server and determining from which of the built-in camera, the wired camera, and the wireless camera video image data is sent out to the management server and sending out the video image data.

6. The portable terminal according to claim 5, further comprising means for transmitting a text inputted in association with the video image data sent out to the management server as a comment to the management server.

7. The portable terminal according to claim 5, further comprising
means for displaying an urgency degree selection column representing a plurality of degrees of urgency, and
means for selecting a degree of urgency in a shooting site from the urgency degree selection column and transmitting the degree of urgency to the management server.

8. A video image communication adapter that transmits video image data from a connected wired camera or wireless camera to a management server via a portable communication service or a public wireless LAN service, the video image communication adapter comprising:
means for receiving an instruction from a portable terminal;
at least one of means for receiving video image data from the wired camera on the basis of an instruction from the portable terminal and means for receiving video image data from the wireless camera on the basis of an instruction from the portable terminal; and
means for transmitting the video image data received on the basis of the instruction from the portable terminal to the management server.

9. A management server that receives video image data from a portable terminal or a video image communication adapter and displays a video image based on the video image data on a connected display terminal, the management server comprising:
means for receiving at least one of video image data from a built-in camera contained in the portable terminal, video image data from a wired camera connected to the video image communication adapter, and video image data from a wireless camera wirelessly connected to the video image communication adapter;
means for acquiring positional information from the portable terminal; and
means for transmitting the acquired video image data and positional information to the display terminal.

10. The management server according to claim 9, further comprising means for receiving text data inputted from the portable terminal in association with a video image received from the portable terminal or the video image communication adapter and means for transmitting the text data, together with the video image data, as a comment to the display terminal.

11. The management server according to claim 9, further comprising means for receiving a degree of urgency selected from an urgency degree selection column representing a plurality of degrees of urgency in the portable terminal in association with a video image received from the portable terminal or the video image communication adapter, and means for transmitting the degree of urgency to the display terminal.

12. A method for sharing a video image in a video image sharing system comprising a management server, at least one portable terminal including a built-in camera and communicable with the management server, a video image communication adapter including at least one of a wired camera and a wireless camera to be selected on the basis of an instruction from the portable terminal and communicable with the management server, and a display terminal connected to the management server, the video image sharing method comprising:
the step of the portable terminal selecting any one of the built-in camera, the wired camera, and the wireless camera as a shooting camera for distributing a moving image to the management server;
the step of the portable terminal acquiring its own positional information;
the step of the portable terminal or the video image communication adapter transmitting video image data from the camera selected by the portable terminal to the management server;
the step of the portable terminal transmitting the positional information of the own portable terminal to the management server;
the step of the management server receiving the video image data and the positional information transmitted from each of the portable terminals;
the step of the management server transmitting the video image data and the positional information of the portable terminal to the display terminal; and
the step of the display terminal displaying, on the basis of the video image data and the positional information received from the management server, a position on a map of the portable terminal and a video image based on the portable terminal or the video image data.
